# EUROPÄISCHE PATENTANMELDUNG

(11) **EP 0 617 223 A1**
(43) Veröffentlichungstag der Anmeldung: **28.09.1994**
(21) Anmeldenummer: 94104313.5
(22) Anmeldetag: 18.03.1994
(51) Int. Cl.: F16M 5/00

(54) **Befestigungsanordnung für eine vertikalachsige Maschine**

(30) Priorität: 23.03.1993 CH 880/93
(71) Anmelder: Starcevic, Mihailo, CH-5507 Mellingen (CH)
(72) Erfinder: Starcevic, Mihailo, CH-5507 Mellingen (CH)
(74) Vertreter: Blum, Rudolf Emil Ernst

(57) **Zusammenfassung**

Die den Stator abstützenden, vertikalen Schrägblattfedern (3) sind auf horizontalen Fussplatten (10) befestigt. Unterhalb der Fussplatten (10) ist je ein längliches Auflageelement (14) angeordnet, welches auf einer Fundamentplatte liegt. Die Fussplatten (10) sind ausserdem so mit der Fundamentplatte verbunden, dass radiale Kräfte ab einer gewissen Stärke nicht mehr an das Fundament übertragen werden. Zur Aufnahme dieser Kräfte sind Verbindungselemente (9) vorgesehen, welche die Fussplatten miteinander verbinden und horizontale Kräfte aufnehmen.

Mit dieser Konstruktion wird erreicht, dass die Schrägblattfedern um eine Kippachse (K), die senkrecht zur Federebene (5) liegt, elastisch gekippt werden können. Dies reduziert bei gegebener Eigenfrequenz die Belastung des Federmaterials. Auch werden die durch die Einspannung erzeugten Zugkräfte auf das Fundament kleiner.

Mit den Verbindungselementen (9) und der oben beschriebenen Beschränkung der Kräfte zwischen den Fussplatten und dem Fundament wird ausserdem erreicht, dass grosse radiale Kräfte nicht auf das Fundament übertragen werden, was eine Beschädigung des Fundaments bei einem Störfall verhindert.

## Beschreibung

Die Erfindung betrifft eine Befestigungsanordnung für eine vertikalachsige Maschine gemäss dem Oberbegriff der unabhängigen Ansprüche.

Anordnungen dieser Art sind bekannt. So wird in CH 594311 das Prinzip der Federung von Maschinen mittels Schrägblattfedern beschrieben. Hierbei wird ein Maschinenteil mittels mehrerer, vertikal stehender Blattfedern abgestützt. Diese Blattfedern sind so angeordnet, dass sie in Ebenen liegen, die eine gedachte, mit der Vertikalachse der Maschine koaxiale Zylinderfläche tangieren, dessen Halbmesser kleiner ist als die mittlere radiale Entfernung der Blattfedern von der Vertikalachse. Somit sind also die Blattfedern unter einem spizten Winkel gegenüber den jeweiligen Radialrichtungen angeordnet. Dieser Winkel wird im folgenden Federwinkel genannt.

Die Vorteile der Federung mittels Schrägblattfedern werden z.B. in den Brown Boweri Mitteilungen Band 70 (7, 8), Seiten 258 - 267 beschrieben. Diese Art der Federung sichert die Kreisform der Maschine und erlaubt freie thermische Dehnung, wenn die Federn genügend dünn sind. Ausserdem wird durch die schräge Anordnung der Blattfedern deren axiale Tragkraft erhöht. Ferner sollen die Federn die hohen Kräfte im Störungsfall dynamisch reduzieren.

Die Federn müssen eine relativ weiche Kopplung gewährleisten, damit die rotative Eigenfrequenz der Maschine im gewünschten, tiefen Bereich, vorzugsweise etwa bei einem Drittel der Netzfrequenz liegt. (Für die theoretischen Aspekte wird auf E. Wiedemann, W. Kellenberger, "Konstruktion elektrischer Maschinen, Springer-Verlag, Berlin, 1967, insbesondere Seiten 578 - 583 verwiesen.) Die Breite der Federn in der Federebene ist unabhängig vom Federwinkel dadurch gegeben, dass die translatorische Eigenfrequenz in einem bestimmten Bereich oberhalb der Rotordrehfrequenz liegen soll.

Um die gewünschte tiefe rotative Eigenfrequenz zu erreichen, muss der Federwinkel genügend klein sein, insbesondere bei Maschinen mit niederer Netzfrequenz.

Die Geometrie der Federn ist somit durch die gewünschten Eigenfrequenzen im wesentlichen gegeben. Es zeigt sich, dass insbesondere bei Maschinen mit niedriger Netzfrequenz nur ein sehr zähes Material in der Lage ist, die im Störfall recht grossen Kräfte bzw. Spannungen aufzunehmen. Deshalb werden die Federn bei diesen Maschinen in der Regel aus Federstahl gefertigt. Federstahl ist jedoch sehr teuer, schwer zu bearbeiten und kann nicht geschweisst werden.

Ein weiteres Problem der bekannten Befestigungsvorrichtungen liegt darin, dass insbesondere bei Maschinen mit kleiner Polzahl und geringer Netzfrequenz im Störfall sehr grosse Radialkräfte auf das Fundament ausgeübt werden, die dieses beschädigen können. Dies ist darauf zurückzuführen, dass bei solchen Maschinen die hohe Drehzahl eine hohe translatorische Frequenz und Steifigkeit verlangt, andererseits muss die rotative Eigenfrequenz möglichst tief bleiben. Beide Bedingungen sind nur bei kleinen Federwinkeln zu erfüllen, bei welchen die Radialkräfte sehr gross werden.

Ferner werden bei Auslenkungen der Federn in ihren Federebenen durch die Einspannmomente beträchtliche Zugkräfte auf das Fundament ausgeübt, welche hohe Anforderungen an die Befestigung stellen.

Der vorliegenden Erfindung liegt deshalb die Aufgabe zu Grunde, eine Befestigungsanordnung der eingangs genannten Art zu schaffen, die diese Nachteile des Standes der Technik zumindest teilweise reduziert.

Diese Aufgabe wird von der Befestigungsanordnung gemäss den unabhängigen Ansprüchen gelöst.

Indem die Federn so an der Unterlage bzw. dem Maschinenteil befestigt werden, dass sie um eine im wesentlichen senkrecht zur Blattfederebene liegende Achse kippbar sind, bilden sie bei gleicher Federgeometrie eine weichere Federung für Auslenkungen in der Blattfederebene. Bei gegebener Eigenfrequenz können sie deshalb breiter und somit massiver gewählt werden. Damit wird die machanische Belastung des Materials reduziert. Es wird also möglich, ein billigeres, einfacher zu bearbeitendes Material, insbesondere ein schweissbarer Stahl zu verwenden. Ausserdem werden die oben erwähnten Zugkräfte reduziert bzw. vermieden.

Die Einspannung der Federn normal zur Blattfederebene bleibt vorzugsweise im wesentlichen steif und die Knicksicherheit der Federn wird nicht beeinträchtigt.

Vorzugsweise sind die Blattfedern mit Fussplatten verbunden, die auf länglichen, quer zu den Blattfederebenen angeordneten Auflageplatten ruhen. Die Kippung kann somit um diese Auflageplatten stattfinden. So wird eine sehr robuste, einfache Konstruktion mit den gewünschten Eigenschaften erreicht.

Ferner können Mittel vorgesehen sein, um das Kippgelenk, d.h. die Verkippung zu versteifen. Auf diese Weise wird es möglich, die entsprechende Eigenfrequenz zu beeinflussen. Dies ist von grosser praktischer Bedeutung, da es in der Regel nicht möglich ist, die Eigenfrequenzen einer Maschine exakt vorauszubestimmen.

Vorzugsweise ruhen die Blattfedern auf Fussplatten, wobei die Fussplatten über Verbindungselemente verbunden sind, so dass die Fussplatten und die Verbindungselemente einen Ring bilden. Die Fussplatten sind so mit der Unterlage verbunden, dass eine radiale Bewegung jede Fussplatte möglich bleibt. Somit werden grosse radiale Kräfte auf den Ring und nicht auf das Fundament übertragen. Diese Kräfte bewirken, dass sich der Ring elastisch dehnt bzw. zusammenzieht. Der Ring ist vorzugsweise so zu dimensionieren, dass im Störfall die radiale Bewegung der Fussplatten kleiner als 5% des Luftspaltes der Maschine ist.

In einer weiteren, bevorzugten Ausführung können derartige Verbindungselemente auch mit herkömmlichen Schrägblattfedern ohne Kippgelenke verbunden werden. Auch in diesem Falle ist gewährleistet, dass die Kräfte in einem Störfall von den Verbindungselementen aufgefangen und nicht auf das Fundament übertragen werden.

Weitere Vorteile der erfindungsgemässen Befestigungsanordnung ergeben sich aus der nun folgenden Beschreibung einiger Ausführungsbeispiele anhand der Figuren. Dabei zeigen:
Figur 1 eine halben vertikalen Schnitt durch eine Maschine mit der erfindungsgemässen Befestigungsanordnung,
Figur 2 eine Draufsicht auf einen Teil des Ringes mit zwei Fussplatten, mit einem Verbindungselement und mit einer Andeutung ihrer Lage in bezug auf die Achse des Stator-Maschinengehäuses,
Figur 3 eine erste Möglichkeit der Befestigung der Blattfedern im teilweisen Vertikalschnitt entlang Linie III-III der Figur 4,
Figur 4 eine Draufsicht auf die Befestigung nach Figur 3,
Figur 5 eine zweite Möglichkeit der Befestigung der Blattfedern,
Figur 6 den Schnitt entlang Linie VI-VI von Figur 5,
Figur 7 ein vergrössertes Detail aus Figur 6,
Figur 8 eine dritte, bevorzugte Möglichkeit der Befestigung der Blattfedern,
Figur 9 einen Schnitt entlang Linie IX-IX von Figur 8,
Figur 10 eine weitere, bevorzugte Ausführung der Befestigungsvorrichtung ohne Verbindungselemente,
Figur 11 einen Teilschnitt entlang Linie XI-XI von Figur 10, und
Figur 12 eine Ansicht aus Richtung XII von Figur 10.

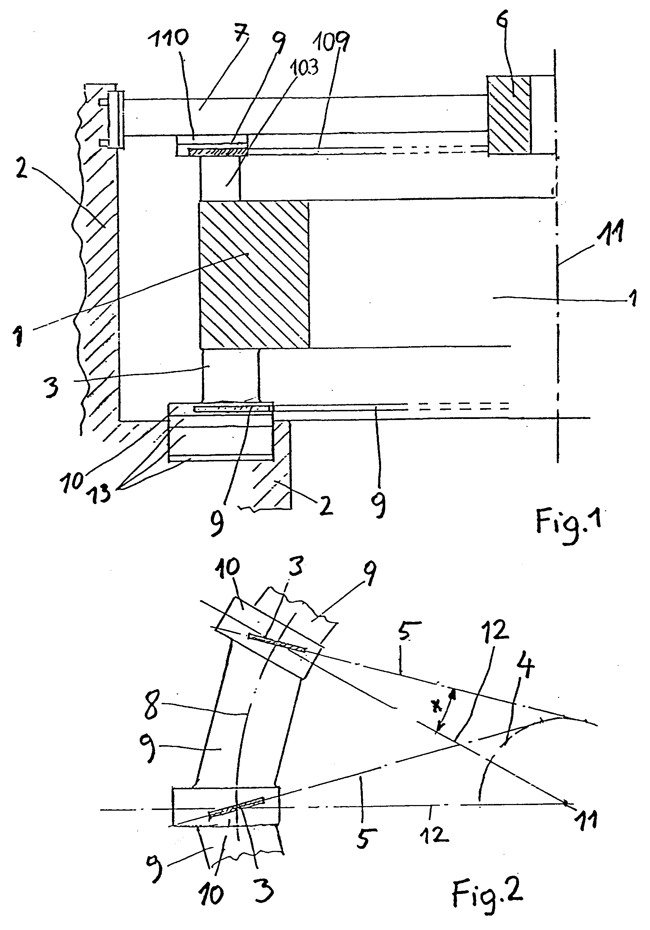

Figur 1 zeigt einen Schnitt durch ein vertikalachsiges Stator-Maschinengehäuse mit Stator 1, welches im wesentlichen über Schrägblattfedern 3 in einem Fundament 2 gelagert ist. Ein ringförmiger Zentralkörper 6 ist mit sternartig befestigten Tragarmen 7 gehalten. Der Stator ist über einen zweiten Satz von Schrägblattfedern 103 mit den Tragarmen 7 verbunden.

Die Maschine ist im wesentlichen rotationssymmetrisch zur Symmetrieachse 11. Figur 1 zeigt nur eine der Blattfedern 3, von denen jedoch mehrere um die Vertikalachse 11 ringförmig verteilt sind.

Figur 2 zeigt eine erste Ausführung der Befestigungsanordnung, auf welcher der Stator ruht. Die Schrägblattfedern 3 liegen in vertikalen Ebenen 5. Diese Ebenen tangieren einen gedachten Zylinder 4, so dass die Federn 3 mit den jeweiligen radialen Richtungen 12 je einen spitzen Federwinkel X einschliessen.

Die Blattfedern 3 stehen starr befestigt auf Fussplatten 10. Die Fussplatten 10 sind untereinander mittels Verbindungselementen 9 verbunden. Die flachen, geraden Verbindungselemente 9 bilden eine zug- und stossfeste Verbindung zur Aufnahme horizontaler Kräfte zwischen den Fussplatten 10, behindern jedoch eine Verkippung der Federn um ihre jeweiligen Kippachsen (siehe unten) kaum.

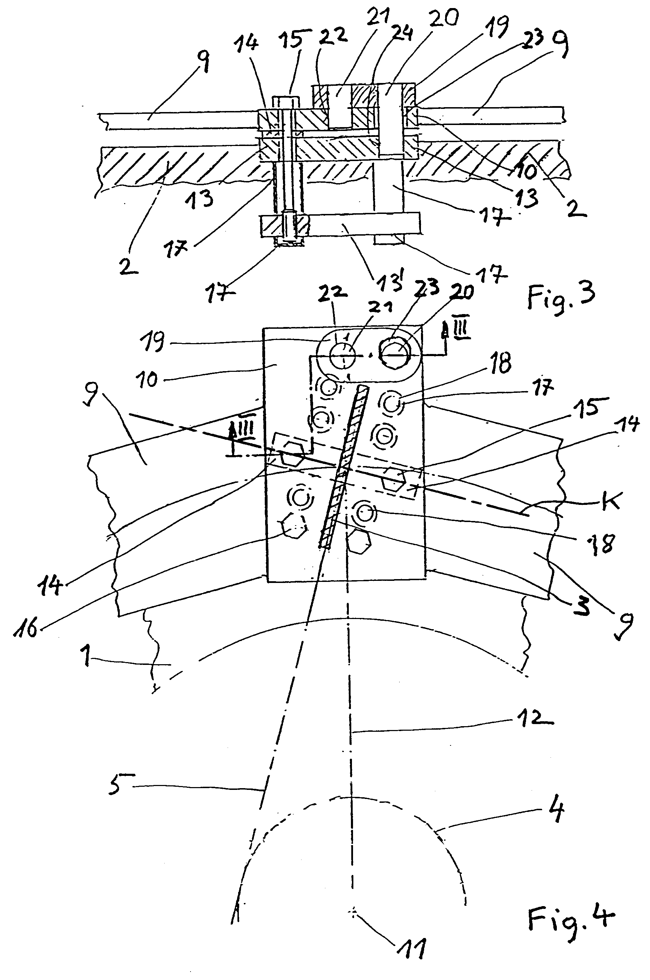

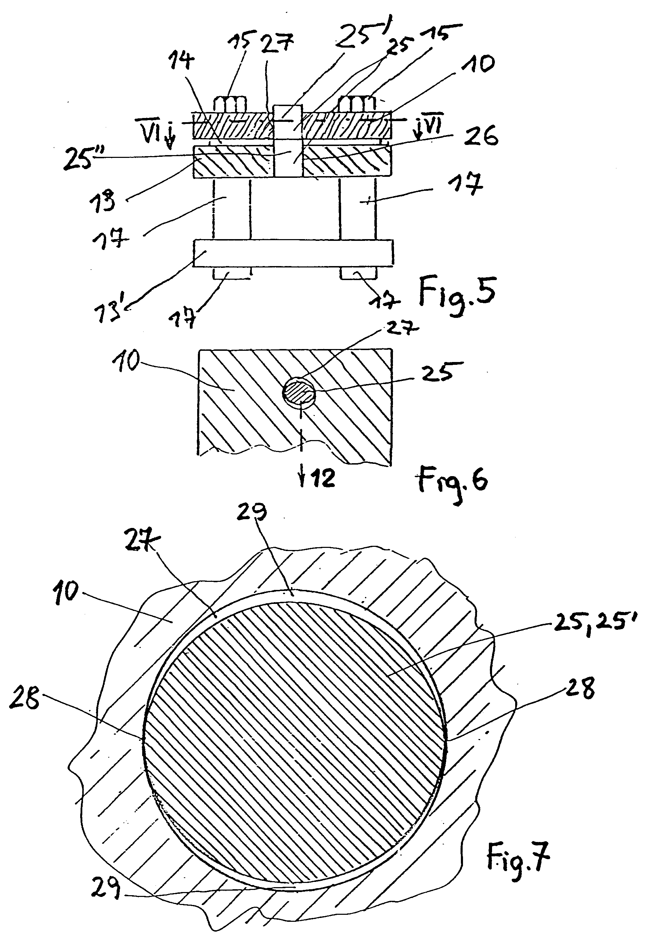

Die Figuren 3 und 4 zeigen eine mögliche Ausführung der Kopplungsvorrichtung, welche die Blattfedern 3 mit dem Fundament 2 verbindet. Im Fundament 2 befinden sich eine obere und eine untere Fundamentplatte 13 resp. 13'. In der unteren Fundamentplatte 13' sind zwei Befestigungsschrauben 15 verankert, welche in Schutzrohren 17 angeordnet sind. Zwischen der Fussplatte 10 und der oberen Fundamentplatte 13 befindet sich eine längliche Auflageplatte 14, welche in Figur 4 gestrichelt dargestellt ist. Die Fussplatte 10 ruht auf dieser Auflageplatte 14.

Die Lagerung der Fussplatte 10 auf der schmalen, länglichen Auflageplatte 14 bewirkt, dass die Fussplatte 10 und somit auch die Blattfeder 3 elastisch um eine Kippachse K gekippt werden kann. Die grosse Länge der Auflageplatte 14 verhindert jedoch weitgehend, dass die Fussplatte 14 um eine horizontale, in der Blattfederebene 5 liegende Achse gekippt werden kann. Damit wird die Federung für horizontale Kräfte in der Blattfederebene 5 weicher, rsp. es wird möglich, bei gegebener Translationseigenfrequenz die Breite der Blattfeder grösser zu wählen. Die Vorteile dieser Konstruktion wurden eingangs erörtert. Insbesondere können aufgrund der geringeren Spannungen die Blattfedern aus einem einfach zu bearbeitenden, preiswerten Stahl (z. B. DIN-Stahl St E 355) gefertigt werden.

Um ein problemloses Abkippen um die Kippachse K zu erlauben, wird die Auflageplatte 14 vorzugsweise aus einem relativ weichen, elastischen Metall oder Kunststoff gefertigt oder mit einem bombierten Querschnitt versehen.

In der Fussplatte 10 sind Bohrungen 18 zur fakultativen Aufnahme von Abdrückschrauben 16 vorgesehen. Durch Einsetzen und Anziehen dieser Schrauben kann die Kippbewegung um die Kippachse K versteift werden, was eine Erhöhung der entsprechenden Eigenfrequenz bewirkt. Damit kann eine alfällige Resonanz zwischen Rotordrehung und Translationsschwingung des Stators unterdückt werden.

Die Teile 19 - 24 bilden eine Verbindung zwischen der Fundamentplatte 13 und der Fussplatte 10, welche tangentiale aber praktisch keine radialen Kräfte überträgt und eine beschränkte radiale Bewegung der Fussplatte 10 zulässt. Hierzu trägt die Fundamentplatte 13 in einer Bohrung 24 den unteren Teil eines Drehbolzens 20, dessen oberer Teil durch eine Bohrung 23 der Fussplatte 10 ragt und in einen Schwenkarm 19 eingreift. Die Bohrung 23 ist grösser als der Durchmesser des Drehbolzens 20 gewählt. Ein Schwenkbolzen 21 ruht in einer Bohrung 22 der Fussplatte 10 und greift drehbar in den Schwenkarm 19 ein. Somit kann der Schwenkarm 19 eine Schwenkbewegung in der Richtung des in Figur 4 gezeigten Doppelpfeils (Radialrichtung) ausführen.

In den Figuren 5 bis 7 wird eine zweite Ausführung der Verbindung zwischen Fundamentplatte 13 und Fussplatte 10 gezeigt, welche die Teile 19 - 24 der Figuren 3 und 4 funktionell ersetzt. Hier trägt die Fundamentplatte 13 in einer Bohrung 26 den zylinderischen Teil 25'' eines festen Bolzens 25. Dieser Bolzen geht in seinem oberen Teil in einen ovalen Abschnitt 25' über, der in die Bohrung 27 der Fussplatte 10 greift. Wie insbesondere aus Figur 7 ersichtlich ist, berührt der ovale Teil 25' des Bolzens die Bohrung 27 in zwei gegenüberliegenden Berührungsstreifen 28. Im radial inneren und äusseren Teil der Bohrung bleiben also Spielräume 29, die mit kleinem Kraftaufwand eine radiale Verschiebung der Fussplatte 10 erlauben, wobei eine gewisse elastische Deformation des Materials stattfindet.

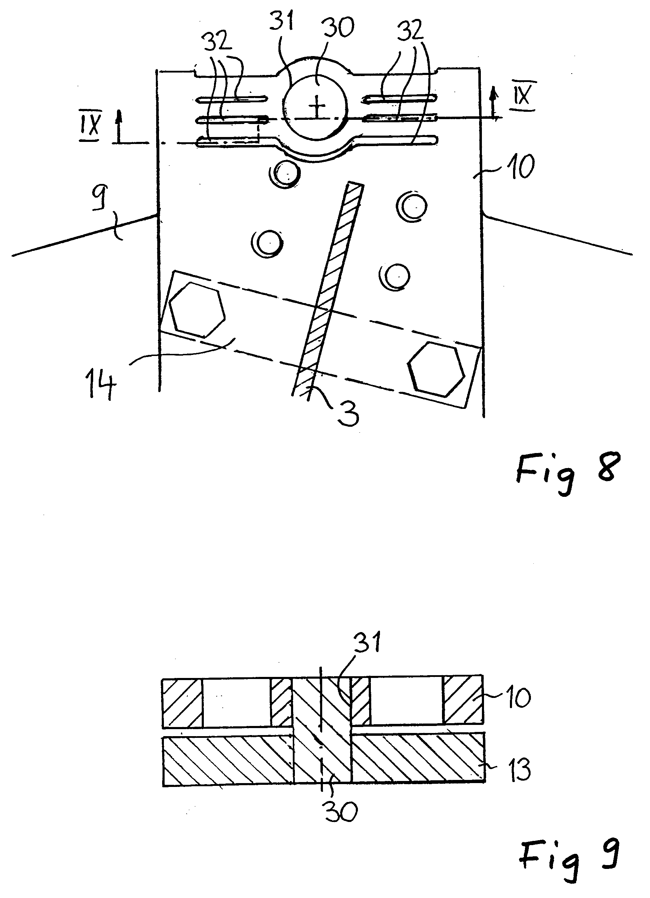

Eine weitere, bevorzugte Möglichkeit, die Fussplatte mit dem Fundament zu verbinden, ist aus den Figuren 8 und 9 ersichtlich. Hier ist ein Bolzen 30 fest mit der Fundamentplatte 13 verbunden und greift in eine Bohrung 31 der Fussplatte. Im Bereich dieser Bohrung 31 sind in der Fussplatte 10 tangentiale Ausnehmungen 32 ausgeformt, wodurch eine Tantentialfelder gebildet wird, in der die Bohrung 31 liegt. Auch hier ist wiederum die tangentiale Kraftübertragung zwischen Fussplatte 10 und Fundamentplatte 13 gewährleistet, während radiale Kräfte weniger stark übertragen werden.

Wie eine Analyse der Kräfteverhältnisse im Normalbetrieb und bei geringen Störfällen zeigt, sind die radialen Kräfte, die die Federn 3 auf die Fussplatten 10 aus üben, so klein, dass sie vom Fundament aufgefangen werden können. Deshalb werden die vertikalen Kräfte, die auf die Auflageplatte 14 wirken, und deren Haftreibungskoeffizient so gewählt, dass die maximale Haftreibung grösser als die im Normalbetrieb wirkenden Radialkräfte ist. Damit stehen im Normalbetrieb die Fussplatten 10 relativ zu den oberen Fundamentplatten 13 still.

Erst bei einem grossen Störfall, wie z.B. einem Kurzschluss and den Klemmen, überschreiten die auftretenden Radialkräfte die Belastungsgrenze des Fundaments. Um eine Beschädigung des Fundaments zu verhindern, ist deshalb die maximale, durch die Auflageplatte vermittelte Haftreibung kleiner als die Maximalkraft gewählt, die das Fundament aufzunehmen vermag. So wird eine Rutschkupplung gebildet, die beim Auftreten übermässiger Radialkräfte gelöst wird, so dass die Radialkräfte vom Ring aufgenommen werden, der von den Fusplatten 10 und den Verbindungselementen 9 gebildet wird.

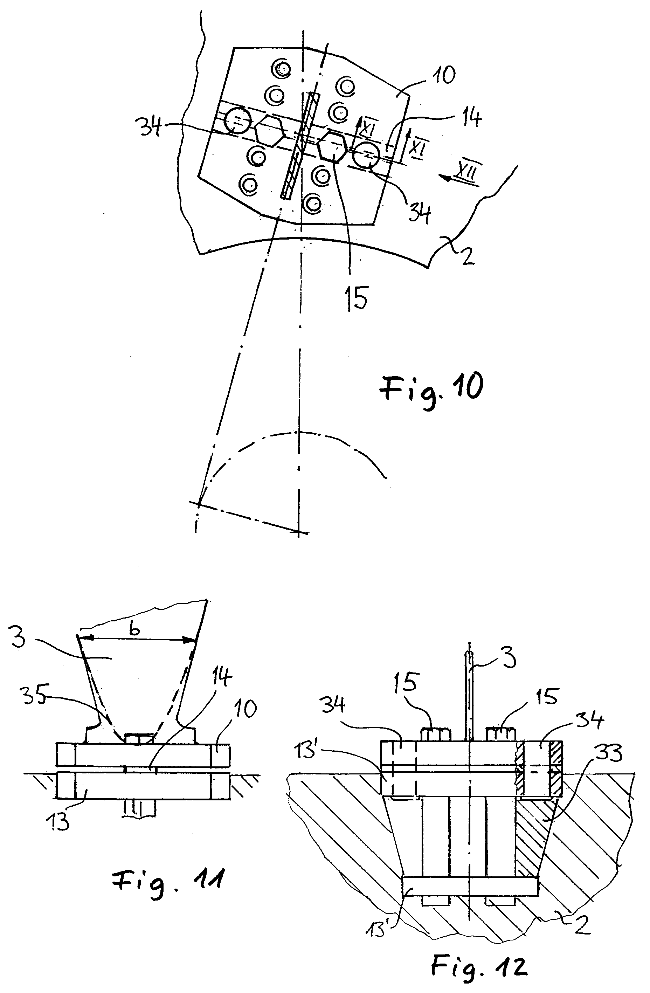

Es zeigt sich, dass, wie eingangs erwähnt, solch grosse Radialkräfte insbesondere bei vierpoligen Einphasenmaschinen auftreten, die mit einer Netzfrequenz von 16 2/3 Herz arbeiten. Bei diesen Maschinen wird dank den Verbindungselementen 9 ein sicherer Betrieb auch im Störfall gewährleistet. Bei Generatoren mit höherer Polzahl oder höherer Netzfrequenz sind die maximal auftretenden Radialkräfte geringer. Deshalb kann bei solchen Maschinen auch auf die Verbindungselemente 9 verzichtet werden. Eine entsprechende Konstruktion ergibt sich aus den Figuren 10 - 12. Hier werden Tangential- und Radialkräfte immer auf die Basisplatten 13 rsp. 13' übertragen, mit welchen die Fussplatte 10 über die zwei Bolzen 34 verbunden ist. Zur sicheren Aufnahme der hohen Radialkräfte ist sich ausserdem in der Ebene der Schrauben 15 eine Rippe 33 aufgespannt, welche im Fundament eingegossen ist.

In diesem Beispiel ist ausserdem die Breite b der Blattfedern nicht konstant. Vielmehr nimmt sie nach oben zu und zwar in im wesentlichen linear zur Wurzel des Abstandes von der Fussplatte. Somit folgt die Feder im wesentlichen einer Parabel 35, wie sie gestrichelt in der Figur 10 eingezeichnet ist. Es lässt sich zeigen (vgl. "Dubbels Taschenbuch für den Maschinenbau", 17. Auflage, Seite G54, Springer Verlag), dass bei einer solchen Feder die Biegespannung über die Federlänge konstant bleibt.

Durch die erfindungsgemässe Ausgestaltung der elastisch kippbaren Kopplungsvorrichtung wird auch bei dieser Ausführung erreicht, dass das Federmaterial nur reduzierten Spannungen ausgesetzt ist. Deshalb kann auch hier ein schweissbarer, gut bearbeitbarer Stahl zur Herstellung der Federn verwendet werden.

In den soweit gezeigten Ausführungsbeispielen wurden die Blattfedern jeweils an ihren unteren Enden kippbar mit den Basisplatten verbunden. Die oberen Enden der Blattfedern waren starr am Stator 1 befestigt. Es ist jedoch auch möglich, eine entsprechend kippbare Kopplung zwischen den Federn 3 und dem Stator 1 anzuordnen. In diesem Falle wird die Verbindung der Federn 3 mit den Basisplatten 13 vorzugsweise nicht kippbar gewählt.

Die erfindungsgemässe Befestigungsanordnung eignet sich nicht nur zur Anwendung zwischen dem Statorgehäuse und dem Fundament. Sie kann auch an anderen Teilen der Maschine eingesetzt werden. So ist zum Beispiel in Figur 1 eine solche Anordnung auch zwischen dem Stator 1 und den Tragarmen 7 vorgesehen. Die Blattfedern sind dort mit 103 bezeichtnet, deren Fussplatten mit 110 und die Verbindungselemente mit 109. Die Auflageplatten (14) sind nicht gezeigt.

Es ist zu betonen, dass die Verbindungselemente 9 auch bei herkömmlichen Schrägblattfedern eingesetzt werden können, die nicht verkippbar angeordnet sind (wie z. B. jene gemäss CH 594 311) sofern die Verbindung zwischen den Schrägblattfedern und dem Fundament so ist, dass sie zumindest hohe Radialkräfte nicht überträgt. Dann werden im Störfall die hohen Radialkräfte vom Ring aufgenommen und eine Beschädigung des Fundaments wird vermieden.

## Patentansprüche

1. Befestigungsanordnung für einen Maschinenteil (1) einer vertikalachsigen Maschine auf einer Unterlage (2), wobei die Befestigungsanordnung mehrere, im wesentlichen in vertikalen Blattfederebenen (5) angeordnete Schrägblattfedern (3) aufweist, die mit einer ersten Kopplungsvorrichtung mit der Unterlage (2) und mit einer zweiten Kopplungsvorrichtung mit dem Maschinenteil (2) verbunden sind, dadurch gekennzeichnet, dass eine der Kopplungsvorrichtungen jeder Schrägblattfeder (3) als bewegliche Kopplungsvorrichtung ausgebildet ist, und einerseits eine Verkippung der Schrägblattfeder (3) gegenüber der Unterlage (2) resp. dem Maschinenteil (1) um eine im wesentlichen senkrecht zur Blattfederebene liegende Kippachse (K) erlaubt, und andererseits eine Verkippung der Schrägblattfeder (3) gegenüber der Unterlage (2) resp. dem Maschinenteil (1) um eine horizontale, in der Blattfederebene (5) liegende Achse verhindert.

2. Befestigungsanordnung nach Anspruch 1, dadurch gekennzeichnet, dass die bewegliche Kopplungsvorrichtung (10, 14 - 18) die erste Kopplungsvorrichtung ist.

3. Befestigungsanordnung nach Anspruch 1, dadurch gekennzeichnet, dass die Kippachse (K) im wesentlichen durch die bewegliche Befestigungsvorrichtung (10, 14 - 18) geht.

4. Befestigungsanordnung nach einem der vorangehenden Ansprüche, dadurch gekennzeichnet, dass die bewegliche Kopplungsvorrichtung (10, 14 - 18) eine längliche, senkrecht zur Blattfederebene (5) liegende Auflageplatte (14) und eine horizontale, fest mit der Schrägblattfeder (3) verbundene Fussplatte (10) aufweist.

5. Befestigungsanordnung nach einem der vorangehenden Ansprüche, dadurch gekennzeichnet, dass in der beweglichen Kopplungsvorrichtung (10, 14 - 18) Mittel (16 - 18) vorgesehen sind, um die Verkippung um die Kippachse (K) zu versteifen.

6. Befestigungsanordnung nach einem der vorangehenden Ansprüche, dadurch gekennzeichnet, dass die ersten Kopplungsvorrichtungen aller Schrägblattfedern (3) über Verbindungselemente (9) miteinander verbunden sind.

7. Befestigungsanordnung nach Anspruch 6, dadurch gekennzeichnet, dass jede erste Kopplungsvorrichtung eine Fussplatte (10) aufweist, welche die jeweilige Schrägblattfeder (3) abstützt, wobei die Verbindungselemente (9) mit den Fussplatten (10) verbunden sind, und somit die Fussplatten (10) mit den Verbindungselementen (9) einen Ring bilden, wobei die Fussplatten (10) derart mit der Unterlage (2) verbunden sind, dass eine radiale Bewegung jeder Fussplatte (10) gegenüber der Unterlage (3) möglich bleibt.

8. Befestigungsanordnung für einen Maschinenteil (1) einer vertikalachsigen Maschine auf einer Unterlage (2), welche mehrere, im wesentlichen in vertikalen Blattfederebenen (5) angeordnete Schrägblattfedern (3) aufweist, dadurch gekennzeichnet, dass die Schrägblattfedern im Bereich ihrer der Unterlage (2) zugewandten Enden über Verbindungselemente (9) miteineander verbunden sind, und dass die Schrägblattfedern (3) derart mit der Unterlage verbunden sind, dass spätestens beim Ueberschreiten einer maximalen Radialkraft mindestens ein Teil der radialen Kräfte von den Verbindungselementen (9) aufgefangen wird.

9. Befestigungsanordnung nach Anspruch 8, dadurch gekennzeichnet, dass die Schrägblattfedern auf Fussplatten (10) abgestützt sind, wobei die Fussplatten (10) über die Verbindungselemente (9) verbunden sind und mit diesen einen Ring bilden, wobei die Fussplaten (10) auf Fundamentplatten (13) beweglich in radialen Richtungen (12) angeordnet sind.

10. Befestigungsanordnung nach einem der Ansprüche 8 oder 9, dadurch gekennzeichnet, dass die Schrägblattfedern (3) über eine in Radialrichtung elastisch auslenkbare Kopplung (30 - 32; 25 - 28) mit der Unterlage (2) verbunden sind, wobei diese Kopplung vorzugsweise eine Tangentialfeder (30 - 32) umfasst.
